# EUROPEAN PATENT SPECIFICATION

(11) **EP 0 365 006 B1**
(45) Date of publication and mention of the grant of the patent: **10.04.1996**
(21) Application number: 89119420.1
(22) Date of filing: 19.10.1989
(51) Int. Cl.: G01N 35/00, G01N 33/48, B01L 7/00

(54) **Incubation process**
Inkubationsprozess
Procédé d'étuvage

(30) Priority: 20.10.1988 JP 262849/88
(43) Date of publication of application: 25.04.1990
(73) Proprietor: FUJI PHOTO FILM CO., LTD., Kanagawa (JP)
(72) Inventor: Yoshio, Saito, Asaka-shi, Saitama (JP)
(74) Representative: Kraus, Walter, Dr.

(56) References cited:
- EP-A- 0 046 087
- EP-A- 0 056 316
- EP-A- 0 231 951
- US-A- 4 584 275

## Description

The present invention relates to an incubation process which comprises inserting a chemical analytical slide onto which a liquid sample has been spotted into an incubator provided with:
(i) a cell penetrating the body of the incubator in a horizontal direction wherein the chemical analytical slide is inserted, incubated and then ejected horizontally one by one,
(ii) a hole for photometry, and
(iii) a pressure sealing member for sealing a multilayer analytical element which is always urged toward the direction of the hole for photometry.

Such incubation process is applied for loading a chemical analytical slide used for quantitative analysis of various components (analytes) existing in a body fluid such as blood in an incubator.

Recently, in clinical assay field, quantitative analyses of various components existing in a body fluid, such as urea nitrogen, glucose, hemoglobin and ammonia are carried out in a dry process using a chemical analytical slide utilizing dry-type multilayer film-forming techniques.

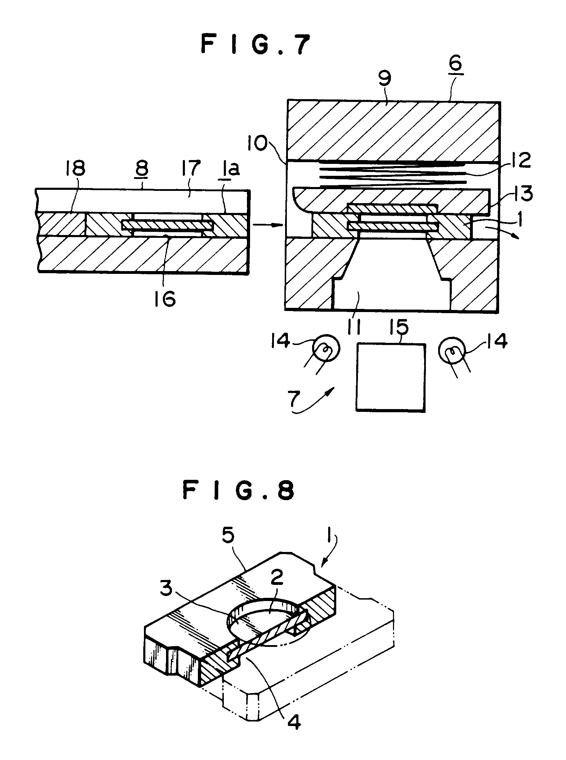

The chemical analytical slide is, in general, like shown in the cross section of Figure 8. That is, the analytical slide 1 is composed of a multilayer analytical element 2 where a reagent layer, a light-reflecting layer and a spreading layer are successively superposed on a transparent support sheet, and a slide frame 5 at the upper part of which an opening for spotting 3 is formed for spotting a liquid sample and at the lower part of which an opening for photometry 4 is formed for colorimetry.

When a liquid sample is analyzed using the above chemical analytical slide 1, the liquid sample is spotted onto the multilayer analytical element 2 through the opening for spotting 3, and a coloring reaction is rendered to proceed sufficiently by incubating, for example, at 37°C for 6 minutes. Then, a light is irradiated to the surface on the photometric side of the multilayer analytical element 2 through the opening for photometry 4, and the reflected light is measured photometrically to determine a particular component according to colorimetric process.

An embodiment of an incubator to incubate such a chemical analytical slide 1 is shown in Figure 7. In Figure 7, symbol 6 indicates the incubator, symbol 7 indicates a photometric part, and symbol 8 indicates a slide-pushing unit. The incubator 6 is composed of an incubator body 9 containing a heating means of a heater (not illustrated). A cell 10 penetrates the body in a holizontal direction for inserting to place the chemical analytical slide 1, and a hole for photometry 11 penetrates a part of the face for placing the chemical analytical slide 1 of the cell 10 and the underside of the incubator body 9. A pressure sealing member 13 made of a plastic is provided in the cell 10 through a coil spring 12 as the urging means, and the pressure sealing member 13 is always urged toward the direction of the hole for photometry 11 by the coil spring 12. The inner surface of the cell 10 and the surface of the pressure sealing member 13 are coated with polytetrafluoroethylene so as not to adsorb the evolved gas.

The photometric part 7 is provided under the hole for photometry 11, and composed of a light source 14 for irradiating light to the multilayer analytical element 2 and a light receiver 15 which receives the reflected light from the multilayer analytical element 2.

The slide-pushing unit 8 is incorporated for inserting the chemical analytical slide 1 into a prescribed position in the cell 10, and ejecting the inserted chemical analytical slide 1 from the cell 10. The slide-pushing unit 8 is composed of a sliding face 16 which is located almost the same level as the placing face of the chemical analytical slide 1 of the cell 10, a guide 17 which guides the chemical analytical slide 1, and a lever 18 which pushes the chemical analytical slide 1.

In the above apparatus, for inserting an unmeasured succeeding chemical analytical slide to be incubated 1a as well as ejecting a measured preceding chemical analytical slide, as shown in Figure 4, an unmeasured succeeding chemical analytical slide 1a is positioned close to the cell 10. Then, as shown in Figure 5, the unmeasured succeeding chemical analytical slide 1a is thrusted into the cell 10, and the measured preceding chemical analytical slide 1b is pushed by the forward end thereof. Finally, as shown in Figure 6, the unmeasured succeeding chemical analytical slide 1a is positioned at the place where the measured preceding chemical analytical slide 1b was positioned, and the measured preceding chemical analytical slide 1b is ejected from the incubator 6.

Then, after an incubation is carried out in this state, the reflection color density formed by coloring reaction is measured through the photometric part 7.

Incidently, various components to be analyzed (analytes) such as urea nitrogen, ammonia, glucose and hemoglobin are measured by such a chemical analytical slide, and each component is measured by using a specific chemical analytical slide for each analyte.

However, in the conventional method where the next chemical analytical slide to be measured pushes out the measured preceding chemical analytical slide and simultaneously itself is loaded in the incubator, the gas evolved from the measured preceding chemical analytical slide occasionally influenced the result of the next chemical analytical slide, and thereby, an accurate analysis cannot be conducted. For example, in the case that the antecedant chemical analytical slide is that for urea nitrogen and the next chemical analytical slide is that for ammonia, ammonia evolved from the antecedant chemical analytical slide remains inside of the incubator, and an accurate measurement of the next chemical analytical slide for ammonia cannot be conducted by the remaining ammonia.

On the other hand, there are the incubators wherein the inner surface of the cell receiving the slide and the surface of the pressure sealing member are treated so as to render the adsorption of gases little (for example, polytetrafluoroethylene coating, chromium plating, mirror finish of metal surface such as mirror finish of stainless steel, or the like), in order to avoid the inaccuracy in the measurement caused by the adsorption of the gas evolved from a chemical analytical slide and the desorption of the adsorbed gas. However, in the above incubator, the gas evolved from a chemical analytical slide remains in the inside of the incubator, and gives an error to the measurement of the next slide.

Furthermore, an incubation process of the type mentioned in the beginning is known from EP-A-0 046 087. In this document there is stated that a difficulty occurs in the known incubation of test elements because certain test chemistries produce gases which, if carried over from one test to the next, would cause erroneous readings. However, although in EP-A-0 046 087 this is pointed out expressly in connection with the object to be solved in this reference, the incubation process disclosed there has the same disadvantages as pointed out above in connection with the other prior art, namely the gas evolved from a chemical analytical slide remains in the inside of the incubator and gives an essential error to the measurement of the next slide.

In detail EP-A-0 046 087 provides an apparatus for the analysis of sample analytes on chemical analytical slides within an incubator. That incubator includes means for defining a path within the incubator and for supporting a plurality of chemical anayltical slides for movement along said path with each chemical analytical slide in contact with chemical analytical slides adjacent thereto. Except the uppermost chemical analytical slide, the sample containing portion of each chemical analytical slide is covered by a respective adjacent chemical analytical slide in the stack of chemical anayltical slides located within the incubator. For covering the sample containing portion of the uppermost chemical analytical slide of said slide stack within the incubator there is provided a movable cover which is only lifted for inserting the next chemical analytical slide in the uppermost postion of said stack since otherwise the next slide would not be insertable. That cover is contained within the incubator chamber containing the above mentioned stack of chemical analytical slides.

Therefore according to the disclosure of EP-A-0 046 087 any gas that evolves from the sample containing portion of a chemical anayltical slide in the incubator is trapped and confined by the covering relationship of another chemical analytical slide positioned above it or by the cover disposed on the uppermost chemical analytical slide of the slide stack within the incubator. Thus there is a high probability that gas evolved by one chemical analytical slide induces erronueous readings in the measurement of the next chemical analytical slide(s).

### SUMMARY OF THE INVENTION

An object of the invention is to provide an incubation process of a chemical analytical slide capable of conducting an accurate measurement at any time, even when the chemical analytical slide antecedently measured evolves a gas affecting the measurement of the next chemical analytical slide.

This object is achieved by an incubation process of the type as mentioned in the beginning which is characterized in that it keeps the inside of te incubator empty for a short time by:
(a) ejecting a chemical analytical slide of which the color density has been measured by pushing it out by a thrusting member;
(b) extracting said thrusting member from the cell;
(c) and thereafter inserting the unmeasured succeeding chemical analytical slide by pushing it by said thrusting member;
(d) wherein the inside of the incubator is kept empty for 1 to 30 seconds after ejecting the measured chemical analytical slide but before inserting the unmeasured succeeding chemical analytical slide.

The present invention has been made in order to achieve the above object, and comprises, after ejecting a measured preceding chemical analytical slide, keeping the inside of the incubator empty for a short time, and inserting an unmeasured succeeding chemical analytical slide to be incubated into the incubator in a diffused state of the evolved gas.

Thus, the incubation process of the invention comprises keeping warm in an incubator a chemical analytical slide onto which a liquid sample has been spotted and thereafter measuring the color density formed by a coloring reaction, and keeping the inside of the incubator empty for a short time after the measured preceding chemical analytical slide is ejected from the incubator, and thereafter inserting an unmeasured succeeding chemical analytical slide into the incubator.

### BRIEF DESCRIPTION OF THE DRAWINGS

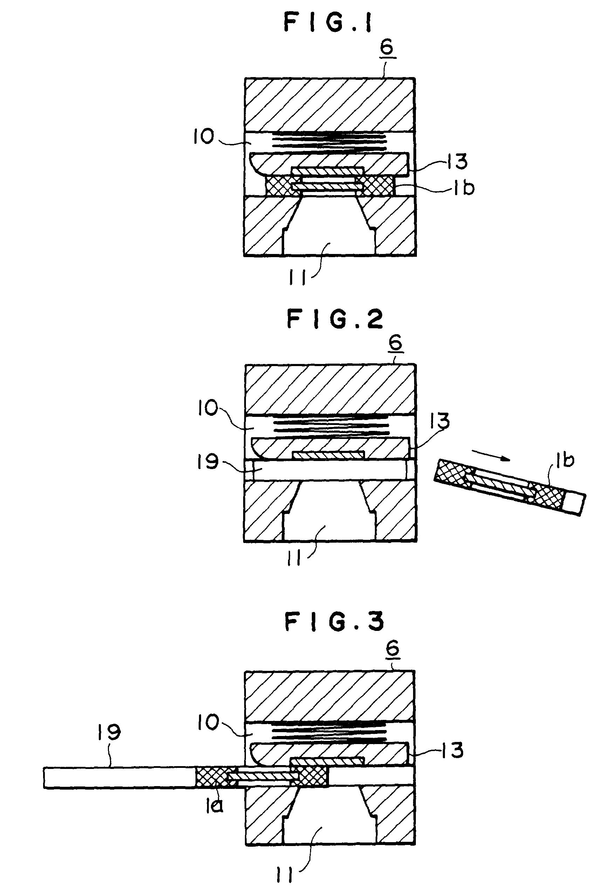

Figure 1 through Figure 3 are sectional views indicating respective motions in the incubation process of the invention.

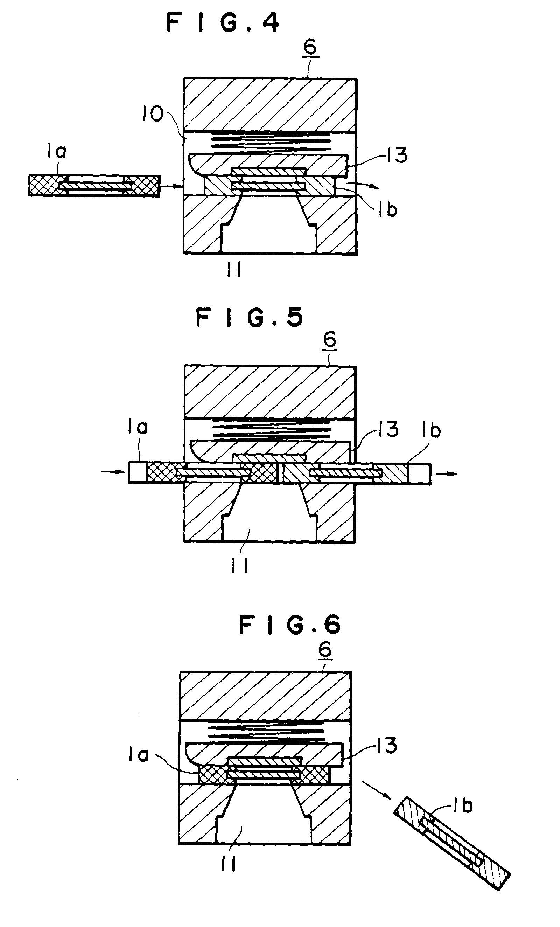

Figure 4 through Figure 6 are sectional views indicating respective motions in a conventional process.

Figure 7 is a sectional view of an incubator.

Figure 8 is a sectional view of a chemical analytical slide.
1 ... chemical analytical slide
1a ... succeeding chemical analytical slide
1b ...preceding chemical analytical slide
6 ...incubator 7 ... photometric part
10 ...cell 19 ... pushing member

### DETAILED DESCRIPTION OF THE INVENTION

The ejecting method of the measured preceding chemical analytical slide from the incubator may be any method other than the method of ejecting it by the pushing of the unmeasured succeeding chemical analytical slide which is measured next. It can be various methods, such as ejecting the chemical analytical slide together with the air in the incubator by thrusting a slide-inserting member or a pushing out member exclusively used for the pushing provided separately into a prescribed position of the inside of the incubator, or ejecting it by drawing.

The reason to keep the inside of the incubator empty for a short time is to diffuse the remaining gas evolved from the antecedant chemical analytical slide resulting to remove the gas from the inside of the incubator so as not to affect the measurement of the next chemical analytical slide. The time to keep empty is preferably more than about 1 second, and the range from about 10 seconds to about 30 seconds is particularly preferred.

In the incubation process of the invention, the evolved gas is diffused from the inside of the incubator up to an extremely low concentration not affecting the measurement by ejecting the measured preceding chemical analytical slide from the incubator and thereafter inserting an unmeasured succeeding chemical analytical slide to be incubated into the incubator after at least one second.

### EXAMPLES

An example of the incubation process of the invention is explained based upon Figure 1 through Figure 3.

Figure 1 through Figure 3 are sectional views illustrating respective motion of the ejection and insertion of a chemical analytical slide. In the drawings, the structure of the chemical analytical slide 1 and incubator 6 is similar to conventional ones.

First, as shown in Figure 1, it is provided that a preceding chemical analytical slide 1b is loaded at a prescribed position of the incubator, and the measurement of the reflection color density formed by a coloring reaction is finished. When the chemical analytical slide 1b is ejected, as shown in Figure 2, a thrusting member 19 having almost the same size and shape as the chemical analytical slide 1b is inserted, and the chemical analytical slide 1b is pushed out by the thrusting member 19.

Subsequently, after the thrusting member 19 is extracted, as shown in Figure 3, a chemical analytical slide 1a is thrusted by the thrusting member 19 into the prescribed position. At that time, the thrusting motion of the thrusting member 19 is conducted after more than 1 second, and the gas evolved from the chemical analytical slide 1b diffuses in and out the incubator 6 resulting to be diluted.

The chemical analytical slide 1a is kept warm for predetermined time, and then, the reflection density formed by the coloring reaction is measured.

A samples and B samples were continuously measured in the order of A, B, and the experimental results are explained below.

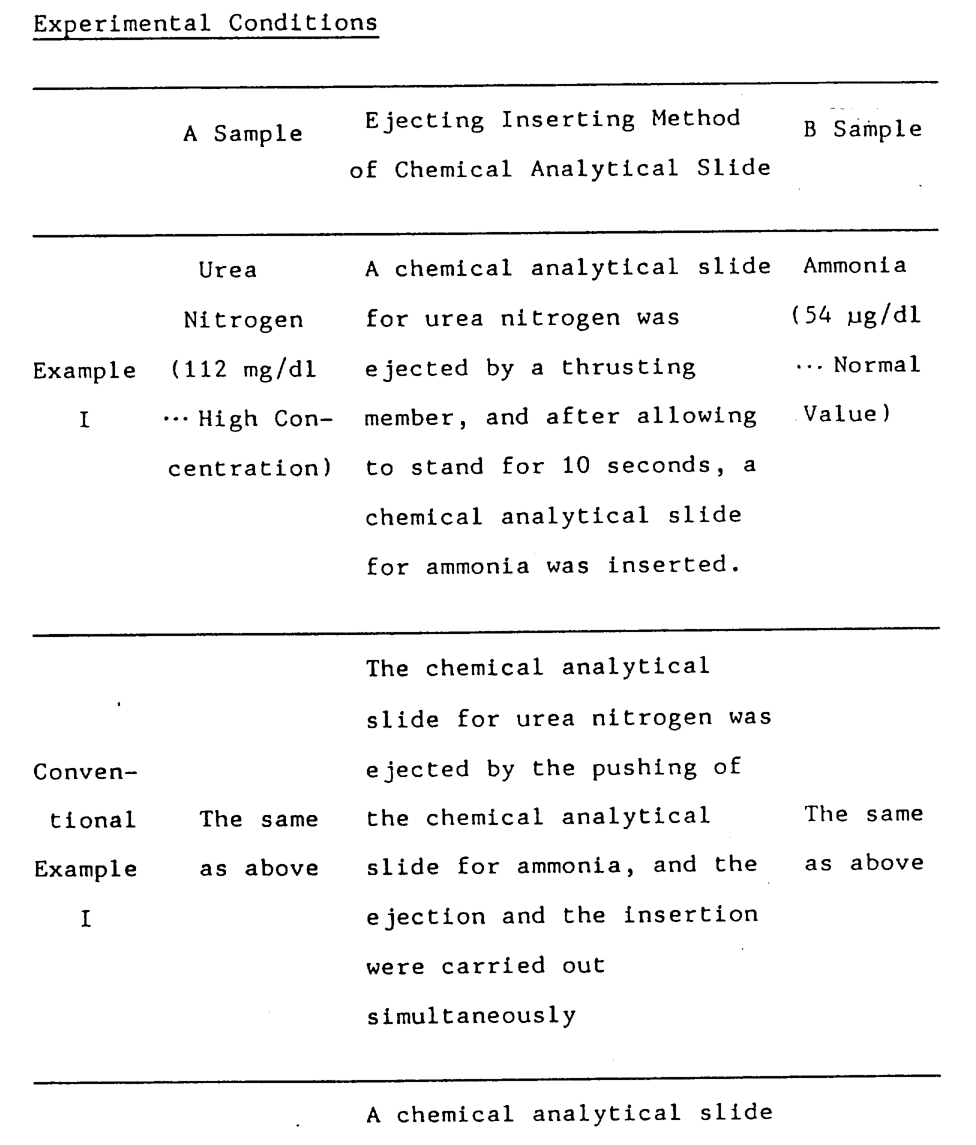

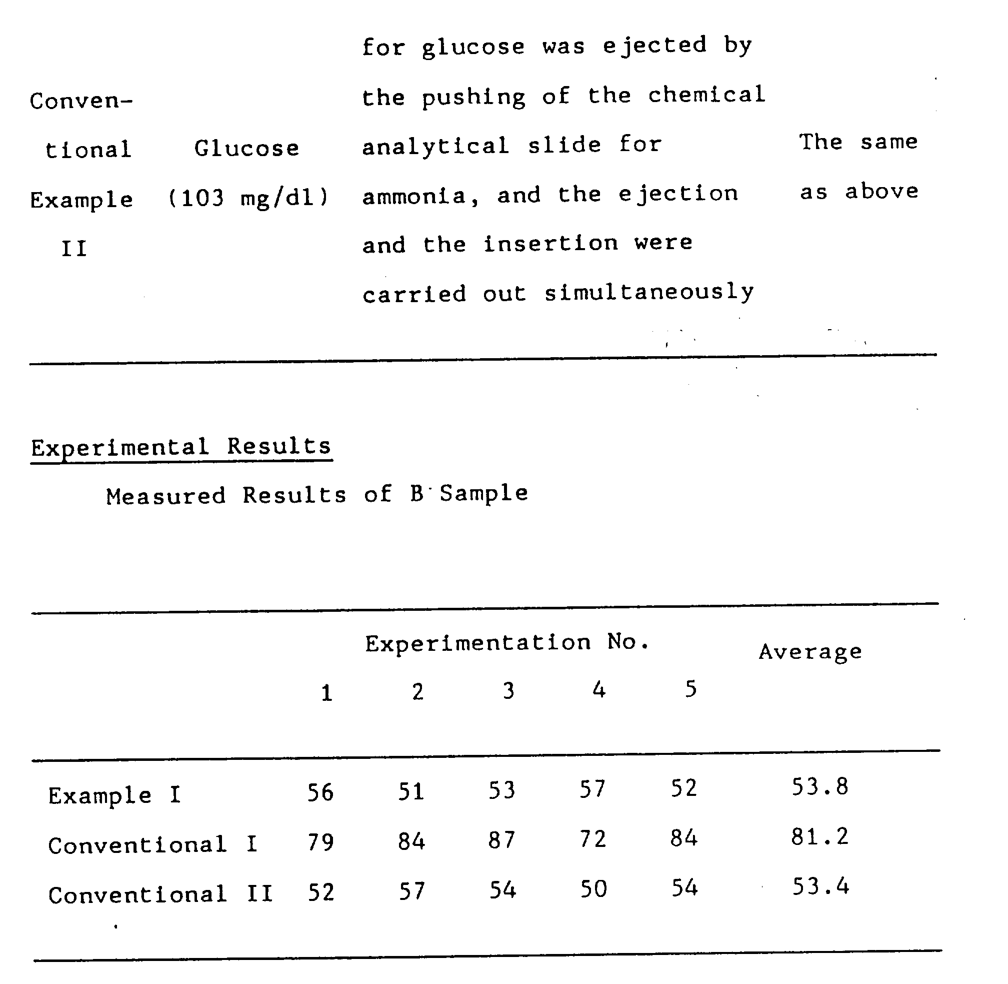

From the above results, a normal value of ammonia was measured in Example I, and it was found that the measure value was not affected by the ammonia evolved from the A sample. Whereas, in the case of Conventional Example I, a high concentration value of ammonia was measured, and it was found that the measured value was affected by the ammonia evolved from the A sample. In the case of Conventional Example II, since the A sample was glucose which did not evolve ammonia, the measurement of the B sample was not affected.

## Claims

1. An incubation process which comprises inserting a chemical analytical slide (1a, 1b) onto which a liquid sample has been spotted into an incubator (6) provided with
(i) a cell (10) penetrating the body of the incubator (6) in a horizontal direction wherein the chemical analytical slide (1a, 1b) is inserted, incubated and then ejected horizontally one by one,
(ii) a hole (11) for photometry, and
(iii) a pressure sealing member (13) for sealing a multilayer analytical element (2) which is always urged toward the direction of the hole (11) for photometry,
characterized in that it keeps the inside of the incubator (6) empty for a short time by:
(a) ejecting a chemical analytical slide (1b) of which the color density has been measured by pushing it out by a thrusting member (19);
(b) extracting said thrusting member (19) from the cell (10);
(c) and thereafter inserting the unmeasured succeeding chemical analytical slide (1a) by pushing it by said thrusting member (19);
(d) wherein the inside of the incubator (6) is kept empty for 1 to 30 seconds after ejecting the measured chemical analytical slide (1b) but before inserting the unmeasured succeeding chemical analytical slide (1a).

2. The process according to claim 1, characterized in that said sealing member (13) is urged by a coil spring (12).

3. The process according to any one of claims 1 and 2, characterized in that the period during which the inside of the incubator (6) is kept empty is 10 to 30 seconds.

## Patentansprüche

1. Inkubationsprozeß, welcher das Einführen eines chemischen analytischen Schiebers (1a, 1b), auf welchen eine flüssige Probe getüpfelt worden ist, in eine Inkubationseinrichtung (6) umfaßt, die versehen ist mit
(i) einer Zelle (10), welche den Hauptteil der Inkubationseinrichtung (6) in einer horizontalen Richtung durchdringt, wo der chemische analytische Schieber (1a, 1b) eingefügt, inkubiert und dann horizontal einer um den anderen ausgestoßen wird,
(ii) ein Loch (11) für die Photometrie, und
(iii) ein Druckabdichtungsteil (13) zum Abdichten eines analytischen Mehrschichtelements (2), welches stets nach der Richtung des Lochs (11) für die Photometrie hin gedrängt wird,
dadurch **gekennzeichnet** , daß er das Innere der Inkubationseinrichtung (6) während einer kurzen Zeit leerhält durch:
(a) Ausstoßen eines chemischen analytischen Schiebers (1b), dessen Farbdichte gemessen worden ist, durch Herausdrükken desselben mittels eines Schubteils (19);
(b) Entnehmen des Schubteils (19) aus der Zelle (10);
(c) und danach Einführen des nichtgemessenen nachfolgenden chemischen analytischen Schiebers (la) durch Drücken desselben mittels des Schubteils (19);
(d) worin das Innere der Inkubationseinrichtung (6) während 1 bis 30 Sekunden nach dem Ausstoßen des gemessenen chemischen analytischen Schiebers (1b), aber vor dem Einführen des nichtgemessenen nachfolgenden chemischen analytischen Schiebers (la), leergehalten wird.

2. Prozeß gemäß Anspruch 1, dadurch **gekennzeichnet,** daß das Abdichtungsteil (13) mittels einer Schraubenfeder (12) gedrängt wird.

3. Prozeß gemäß irgendeinem der Ansprüche 1 und 2, **da durch gekennzeichnet,** daß die Zeitdauer, während welcher das Innere der Inkubationseinrichtung (6) leergehalten wird, 10 bis 30 Sekunden ist.

## Revendications

1. Procédé d'étuvage qui comprend l'insertion d'une plaquette analytique chimique (la,16), sur laquelle un échantillon liquide a été déposé, dans un incubateur (6) comportant :
(i) une cellule (10), pénétrant dans le corps de l'incubateur (6) dans une direction horizontale, dans laquelle la plaquette analytique chimique (1a,1b) est insérée, incubée, et de laquelle elle est ensuite éjectée horizontalement, une par une,
(ii) un trou (11) pour photométrie, et
(iii) un organe d'étanchéité à pression (13),pour assurer l'étanchéité d'un élément analytique multicouche (2),qui est toujours sollicité dans la direction du trou (11) pour photométrie,
caractérisé en ce qu'on maintient l'intérieur de l'incubateur (6) vide pendant un court instant par :
(a) éjection d'une plaquette analytique chimique (1b), dont la densité de couleur a été mesurée, par poussée de cette plaquette hors de l'incubateur au moyen d'un élément de poussée (19) ;
(b) extraction dudit élément de poussée (19) hors de la cellule (10) ; et
(c) ensuite, insertion de la plaquette analytique chimique suivante non mesurée (1a), par poussée de cette plaquette au moyen dudit élément de poussée (19) ;
(d) et en ce qu'on maintient l'intérieur de l'incubateur (6) vide pendant 1 à 30 secondes après l'éjection de la plaquette analytique chimique mesurée (1b) mais avant l'insertion de la plaquette analytique chimique suivante non mesurée (1a).

2. Procédé suivant la revendication 1, caractérisé en ce que ledit organe d'étanchéité (13) est sollicité par un ressort hélicoïdal (12).

3. Procédé suivant une quelconque des revendications 1 et 2, caractérisé en ce que la période pendant laquelle l'intérieur de l'incubateur (6) est maintenu vide est de 10 à 30 secondes.
